# EUROPÄISCHE PATENTSCHRIFT

(11) **EP 3 578 506 B1**
(45) Veröffentlichungstag und Bekanntmachung des Hinweises auf die Patenterteilung: **20.11.2024**
(21) Anmeldenummer: 19172323.8
(22) Anmeldetag: 02.05.2019
(51) Int. Cl.: B67D 7/78, B65D 90/48, G01F 23/64

(54) **VORRICHTUNG ZUR ENTNAHME VON FLÜSSIGKEIT AUS EINEM BEHÄLTER UND VERFAHREN ZU DEREN HERSTELLUNG**
DEVICE FOR REMOVING A LIQUID FROM A CONTAINER AND METHOD FOR ITS MANUFACTURE
DISPOSITIF DE PRÉLÈVEMENT DE LIQUID D'UN RÉCIPIENT ET SON PROCÉDÉ DE FABRICATION

(30) Priorität: 09.06.2018 DE 102018113796
(43) Veröffentlichungstag der Anmeldung: 11.12.2019
(73) Patentinhaber: elobau GmbH & Co. KG, 88299 Leutkirch im Allgäu (DE)
(72) Erfinder: Prinz, Michael, 88299 Leutkirch (DE); Rowenski, Frank, 88299 Leutkirch (DE); Pippirs, Roland, 88299 Leutkirch (DE)
(74) Vertreter: VKK Patentanwälte PartG mbB

(56) Entgegenhaltungen:
- WO-A1-94/04457
- WO-A1-99/27329
- DE-A1- 102008 045 163
- DE-A1- 102010 016 214
- DE-U1- 29 616 560

## Beschreibung

Die vorliegende Erfindung betrifft eine Entnahmevorrichtung für flüssige Medien wie beispielsweise Kraftstoffe und ein Verfahren zu deren Herstellung.

Aus dem Stand der Technik sind derartige Entnahmevorrichtungen bekannt, die üblicherweise senkrecht in einem Medienbehälter, insbesondere einem Tank, oder in den Medienbehälter hineinragend angeordnet sind, in dem sich das flüssige Medium im Betriebszustand befindet.

Derartige Entnahmevorrichtungen weisen in der Regel einen nicht von Medium umgebenen Kopf- und einen in das Medium hineinragenden Fußteil auf, wobei beide über medienführende Distanzelemente miteinander verbunden ausgebildet sind.

Das Kopfteil besitzt üblicherweise Anschlüsse für die Weiterleitung der flüssigen Medien, an die nachgelagert Pumpen-Dosier-Systeme angeschlossen sind. Das Fußteil steht auf dem Medienbehälterboden auf und besitzt eine oder mehrere Einlass-Öffnungen für das Medium. Die Distanzelemente sind dabei üblicherweise Rohre oder Schläuche, in denen das Medium geführt ist. Die Distanzelemente sind dabei mediendicht mit Fuß- und Kopfteil verbunden und als zwei Fluidleitungen ausgebildet, von denen eine als Entnahme- und eine als Rückführleitung dient. Das Erreichen von dichten Verbindungen zwischen den Fluidleitungen und dem Kopf- und Fußteil erfordert erhöhten Montageaufwand, eine entsprechende Anzahl an Teilen und eine entsprechend hohe Fertigungsgenauigkeit. Bei Schläuchen als Fluidleitungen ist die Montage durch erforderliches Durchfädeln, Aufstecken und Sichern erschwert, bei der Montage von Rohren als Fluidleitungen ist in der Regel eine Abdichtung mittels O-Ringen erforderlich, was wiederum eine hohe Sorgfalt bei der Montage und hohe Fertigungsgenauigkeiten der Teile notwendig macht.

Derartige Entnahmevorrichtung weisen weiterhin einen Schwimmer auf, der dem Niveau des flüssigen Mediums folgend ausgebildet ist und dazugehörig eine entsprechende Sensorik, um die Lage des Schwimmers zur Entnahmevorrichtung zu erfassen und somit Aussagen über den Füllstand des Mediums im Behälter treffen zu können.

Derartige Sensorik kann einen oder mehrere Magnete und magnetisch aktive Schaltelemente wie Reed- oder Hallschalter aufweisen, wobei die Schaltelemente üblicherweise in einem Elektronikmodul zusammengefasst und vorzugsweise vom Medium gekapselt ausgebildet sind.

Beispielsweise ist aus der FR 2 550 338 A1 eine solche Kraftstoffentnahmevorrichtung bekannt, bei der ein in ein Kopf- und in ein Fußteil gesteckte Rohrverbindung vorgesehen ist und bei der ein Schwimmer an einer Führung gleitend und von der Rohrverbindung durchsetzt vorgesehen ist.

Aus der CN 101566493 A ist eine Entnahmevorrichtung bekannt, bei der Kopf- und Fußteil durch zwei, jeweils in diese gesteckte, Rohre miteinander verbunden ausgebildet sind.

Aus der DE 10 2010 016 214 A1 und aus der WO 99/27329 A1 ist eine Füllstandsmess- und Entnahmevorrichtung mit einem Kopfteil, einem Fußteil und mindestens zwei, zwischen Kopf- und Fußteil angeordneten fluidführenden und voneinander beabstandeten Rohrleitungen bekannt, die jeweils im Kopfteil und im Fußteil aufgenommen und gehaltert sind, sowie wenigstens einem wirkmäßig in einer weiteren Rohrleitung angeordneten Sensor, wobei jede fluidführende Rohrleitung mindestens einen umgeformten Abschnitt in einem ihrer stirnseitigen Bereiche aufweist und mit diesen im Kopf- oder Fußteil in korrespondierend geformten Aufnahmengedichtet aufgenommen ist. Bei dieser und ähnlichen Vorrichtungen sind die Rohrleitungen zwischen Kopf- und Fußteil frei zugänglich, ihre Aussenwände kommen mit dem Medium in Berührung.

Die Erfindung stellt sich daher die Aufgabe, die Nachteile des Standes der Technik zu vermeiden und eine einfacher konstruierte Entnahmevorrichtung sowie ein Herstellverfahren für diese anzugeben.

Diese Vorrichtungsaufgabe wird gelöst durch eine Entnahmevorrichtung gemäß Anspruch 1 und durch ein Verfahren gemäß Anspruch 9.

Statt einer Vielzahl von Einzelteilen stellt die Erfindung mit großem Vorteil eine Entnahmevorrichtung mit funktionsintegriertem und nach Fügung, insbesondere in nur einem Verfahrensschritt, einstückigem Bauteil aus Mehrkammerrohr, Kopf- und Fußteil zur Verfügung. Das Mehrkammerrohr verfügt über mindestens zwei, voneinander durch wenigstens eine Zwischenwand getrennte, axial verlaufende Kammern und stellt mit seiner Aussenwand einen sicheren Abschluß der Vorrichtung nach außen hin zur Verfügung. Mit großem Vorteil sind die Fluidleitungen, in diesem Fall die im Benutzungsfall fluidführenden Kammern, so von außen nicht zugänglich, es kann sich kein störendes Teil zwischen diese schieben und so beispielsweise eine Entnahme der Vorrichtung aus dem Medienbehälter durch Verklemmen verhindern. Auch kann so kein Benutzer mit seinen Fingern zwischen die Fluidleitungen gelangen, so dass die Verletzungsgefahr mit Vorteil reduziert ist.

Mit großem Vorteil ermöglicht diese Erfindung, den Verzicht auf zusätzliche Dichtelemente, sie weist also keine zwischen Mehrkammerrohr und Kopf- oder Fußteil wirkende Dichtungselemente auf. Dieses funktionsintegrierte Bauteil aus Fuß-, Kopfteil und Mehrkammerrohr kommt von der Medienansaugstelle im Fußteil bis zu den Medienanschlüssen im Kopfteil komplett ohne Dichtungen und Dichtungselemente aus, wohingegen im Stand der Technik über diese Strecke mehrere Übergänge vorhanden sind, die allesamt Dichtungselement erfordern. Gerade bei chemisch anspruchsvollen Fluiden oder Medien sind Undichtigkeiten sehr oft der Grund für Ausfälle der Vorrichtung. Gleichzeitig führen Undichtigkeiten auch dazu, dass Medien nicht Luftblasen frei gefördert und dosiert werden können.

In Weiterbildung der Erfindung ist vorgesehen, dass das Mehrkammerrohr mindestens vier Kammern aufweist, insbesondere zwei Kammern zur Fluidführung, eine Kammer zur Aufnahme eines Elektronikmoduls und eine Kammer zur Aufnahme der Füllstandsermittlung, insbesondere eines Schwimmers. Hierbei beinhaltet der Begriff Aufnahme auch nur eine teilweise Aufnahme, mithin eine Führung, der Füllstandsermittlung oder deren Teile, wie des Schwimmers. Die Kammern können dabei querschnittsumfänglich geschlossen ausgebildet sein, bei den nichtmedienführenden Kammern ist auch eine nicht umfangsgeschlossene Ausgestaltung erfindungsgemäß. Erfindungsgemäß grenzen dabei mindestens zwei benachbarte Kammern von den mindestens vier Kammern an eine gemeinsame Trennwand zwischen ihnen, es können jedoch auch alle Kammern jeweils mittels einer gemeinsamen Trennwand zu einer jeweils benachbarten Kammer angeordnet sein. Bevorzugt ist die Kammer zur Aufnahme des Elektronikmoduls koaxial zum Mehrkammerrohr in diesem angeordnet und bildet so ein Rohr im Rohr. Die weiteren Kammern sind bevorzugt zwischen dieser Kammer und der Wand angeordnet, also radial auswärts.

Weist das Kopfteil Anschlüsse für jede Kammer zur Fluidführung auf, so kann das Fluid oder Medium problemlos durch das Kopfteil weitergeleitet werden. Das Kopfteil greift dabei erfindungsgemäß ebenfalls die Konturen des Mehrkammerrohres auf. Hierbei sind die Anschlüsse für die Fluid-Leitungsverbinder als Standardgewinde und/oder als einrastendes und dichtendes Kupplungselement ausgeführt.

In Ausgestaltung der Erfindung ist vorgesehen, dass das Fußteil die Kammer zur Aufnahme des Elektronikmoduls verschließend ausgebildet ist und/oder eine Aufnahme für ein Grobsieb aufweist und/oder Abstandshalter zur Bildung eines Abstandes zu einem Behälterboden aufweist. Auch das Fußteil greift die Konturen des Mehrkammerrohs auf und führt diese fort, was zu einer besonders halt- und belastbaren Verbindung führt, da neben dem Stoffschluß unterstützend auch Kontakt- und Anlageflächen zur Verfügung gestellt werden. Das Fußteil bietet erfindungsgemäß auch Aufnahmemöglichkeiten für die Befestigung von Blindstopfen und Stopps für den Nachlauf und weist Abstandshalter auf, die einen konstanten Abstand zu einem Behälterboden sicherstellen, so dass flüssiges Medium stets zutritt zur im Fußteil ebenfalls befindlichen Einlaßöffnung hat.

Mit Vorteil ist erfindungsgemäß vorgesehen, dass der Schwimmer nicht über eine Umfangskontur der Entnahmeeinheit herausragend ausgebildet ist. Hierdurch läßt sich diese stets kollisionsfrei aus dem Behälter entnehmen und kann sich nicht verhaken.

In Ausgestaltung der Erfindung ist vorgesehen, dass mindestens das Kopfteil, das Fußteil und das Mehrkammerohr, bevorzugt jedoch die gesamte Vorrichtung soweit sie nicht elektrische Bauteile betrifft, vollständig gebildet ist aus einem Material gewählt aus der Gruppe gebildet durch: PA12, PPS, HDPE, PVC, PP, PPH, Edelstahl, hochlegiertem Stahl, rostfreiem Stahl, Aluminium. Anstelle eines Materialmixes wie er aus dem Stand der Technik bekannt ist, bestehen die Einzelteile des Funktionsintegrierten Bauteils der erfindungsgemäßen Entnahmeeinheit aus ein und demselben Material.

Mit großem Vorteil ist erfindungsgemäß vorgesehen, dass sie bei denjenigen Wänden, die im Betriebszustand mit Fluid in Berührung kommen, Wandstärken von < 2 mm aufweist, insbesondere auch Schweißnahtbreiten von > 2 mm. Die Vorrichtungen des Standes der Technik weisen aufgrund von u.a. Materialmix, Vielzahl an einzelnen Bauteilen und aufwendigen Herstellverfahren weisen oft Wandstärkenunterschiede, Wandstärkenschwächungen und Wandstärkensprünge auf, was zu Schwachstellen derartiger Vorrichtungen führt. Gerade aggressive Medien können daher in die Vorrichtung eindiffundieren und insbesondere elektrische Bauteile und Leitungen schädigen und somit die Lebensdauer der Entnahmevorrichtung stark einschränken oder diese sogar zerstören. Erfindungsgemäß sind sogar die Fügestellen mit der erfindungsgemäß hohen Wandstärke versehen und führen diese damit gleichförmig und homogen weiter.

Die Verfahrensaufgabe wird gelöst durch ein Verfahren zur Herstellung einer Entnahmeeinheit wie beschrieben, bei dem ein Kopfteil und ein Fußteil jeweils mit einem Ende eines Mehrkammerrohrs durch Schweißen unter Erzeugung von Schweißnähten einstückig und unlösbar gefügt werden.

Die Weiterbildung des Verfahrens sieht vor, dass die Schweißnähte mittels Heizelementschweißens, insbesondere Spiegelschweißen, oder Heizwendelschweißens erzeugt werden, bevorzugt mittels Heizelementschwei ßens.

Schließlich ist erfindungsgemäß noch vorgesehen, dass das Mehrkammerrohr mittels eines Extrusionsverfahrens hergestellt wird und/oder das Kopfteil und/oder das Fußteil jeweils als Spritzgußteil hergestellt wird. Mit großem Vorteil ist das Mehrkammerrohr als extrudiertes Teil grundsätzlich unendlich lang herstellbar und kann daher kostengünstig hergestellt werden. Es braucht zum Verbau nur auf die erforderliche Länge abgelängt zu werden. Hierdurch lassen sich ganz unterschiedlich lang dimensionierte Entnahmevorrichtungen ohne aufwändige Lagerhaltung einer Vielzahl von Teilen herstellen.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Fig. 1:: Seitenansicht einer Ausführungsform der Erfindung,
- Fig. 2:: perspektivische Ansicht der Ausführungsform,
- Fig. 3:: erste Explosionsteilansicht der Ausführungsform,
- Fig. 4:: zweite Explosionsteilansicht der Ausführungsform,
- Fig. 5:: Längsschnitt durch die Ausführungsform,
- Fig. 6:: Querschnitt in der Ebene A-A von Fig. 1,
- Fig. 7:: Querschnitt in der Ebene B-B von Fig. 1,
- Fig. 8:: Querschnitt in der Ebene C-C von Fig. 1.

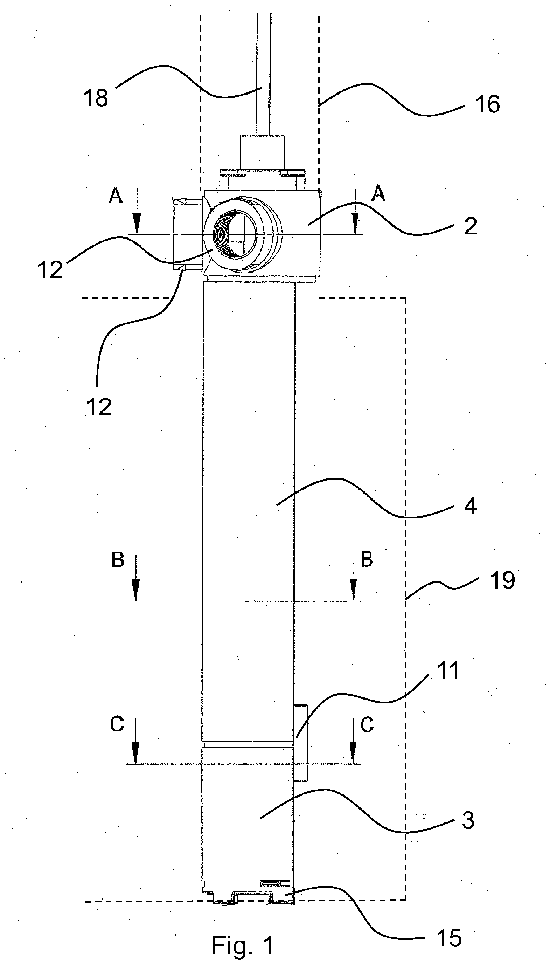

**Fig.** 1 zeigt eine Seitenansicht einer Ausführungsform der erfindungsgemäßen Entnahmevorrichtung 1. Zu erkennen ist ein Fußteil 3, oberhalb dessen eine Fluidleitung 4 angeordnet ist, welches ihrerseits von einem Kopfteil 2 abgeschlossen ist. Am Kopfteil 2 sind zwei Anschlüsse 12 für die Weiterleitung des flüssigen Mediums oder Fluids vorgesehen, von denen das zum Betrachter zeigende ein Innengewinde aufweist. Der geschnitten dargestellte Anschluß 12 weist eine Alternative auf, nämlich ein klipsbares Formschlußelement zur Verbindung mit Medienleitungen, die zu Pump/Dosiersystemen führen. Eine Daten- und Betriebsmittelleitung 18 geht vom Kopfteil 2 ab, wobei das Betriebsmittel hier elektrische Energie ist. Die elektrischen Anschlüsse werden dabei über übliche Steckerbaukastensysteme ermöglicht und weisen Anschlussmöglichkeiten wie M12 auf oder einen Kabelabgang mit Zugentlastung.

Diese Entnahmeeinheit 1 ist im Betriebszustand in einem Behälter 19, insbesondere einem Tank, angeordnet, der in **Fig. 1** mit einer Strichpunktlinie angedeutet ist. Zu erkennen ist dabei, dass das Fußteil 3 an der von der Fluidleitung 4 abgewandten Seite Abstandshalter 15 aufweist, die erfindungsgemäß dazu vorgesehen sind, das Fußteil 3 von einem Behälter- bzw. Tankboden zu beabstanden, so dass das Medium an die Eintrittsöffnung der Entnahmeeinheit 1 gelangen und dieser Zugang nicht durch eventuell im Tank vorhandene, gröbere Verunreinigungen blockiert werden kann. In diesem Bereich findet im Betriebszustand der Einheit die Fluidansaugung statt. Dargestellt sind weiter drei Schnittebenen A, B und C, die weiter unten näher erläutert werden. Im Bereich der Schnittebene C-C ist der Schwimmer 11 zu erkennen, der einen Magneten trägt und Teil der Füllstandsermittlung der Entnahmeeinheit 1 ist und der nicht über die Umfangskontur 16 der Entnahmeeinheit 1 hinausragt, mithin innerhalb desjenigen Bereichs bleibt, der durch die radiale Ausdehnung des Kopfteils 2 in seiner Grundfläche definiert ist.

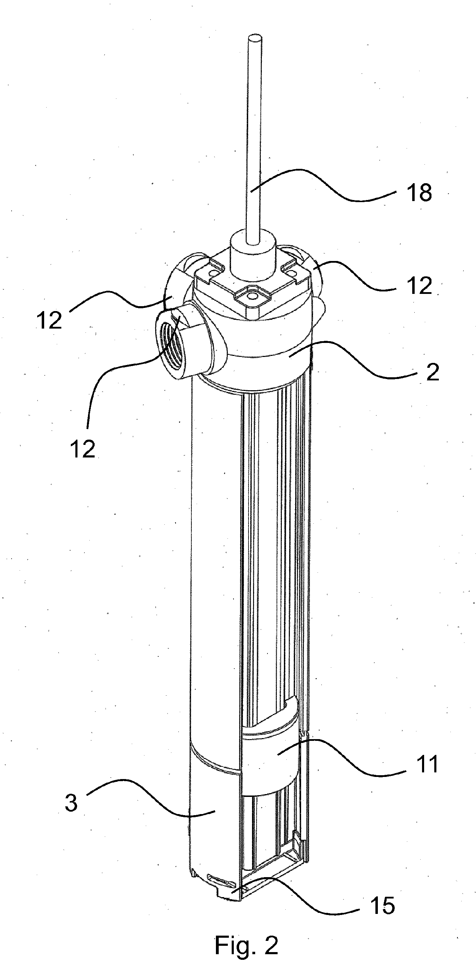

**Fig. 2** zeigt eine perspektivische Ansicht der Ausführungsform der Erfindung mit Blick auf den Schwimmer 11. Zu erkennen ist, dass der Schwimmer 12 im Mehrkammerrohr 6 geführt ist und zu diesem in seiner relativen Lage veränderlich ist. Die Länge seiner Gleitbahn ist definiert durch den zum Fußteil weisenden Rand des Kopfteils und dem Bodenbereich des Fußteils selber, so dass eine fast vollständige Entleerung des Tankes möglich ist, da die Unterkante des Schwimmers bis fast zum freien Ende der Abstandshalter 15 bewegbar ist.

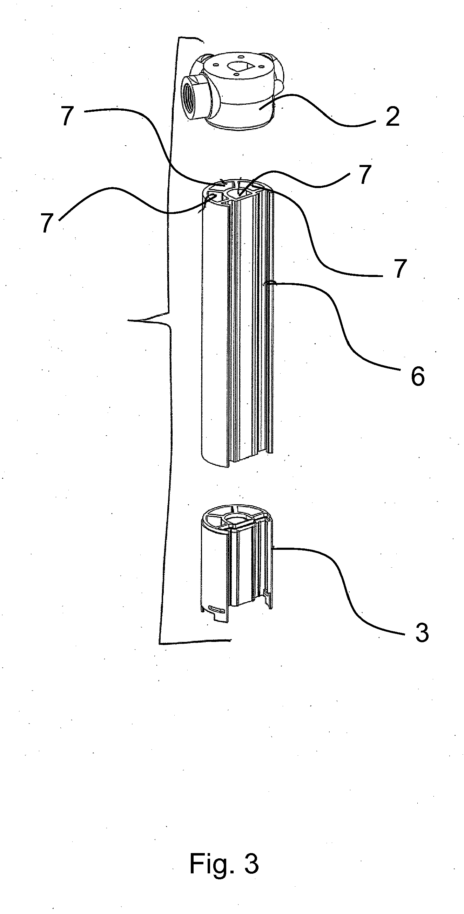

**Fig. 3** zeigt eine erste Explosionsteilansicht der Ausführungsform, insbesondere des funktionsintegrierten Bauteils aus Kopf- und Fußteil 2, 3 und Mehrkammerrohr 6. Zu erkennen sind vier Kammern 7, eine davon koaxial zur Mantelfläche des Mehrkammerrohres 6 und drei davon radial angeordnet zwischen Mantelfläche, bzw. Aussenwand, und der inneren, koaxialen Kammer. Zu erkennen ist weiterhin, dass die Kammern 7 jeweils mit einer gemeinsamen Zwischenwand von jeder benachbarten und angrenzenden Kammer 7 getrennt ausgebildet sind.

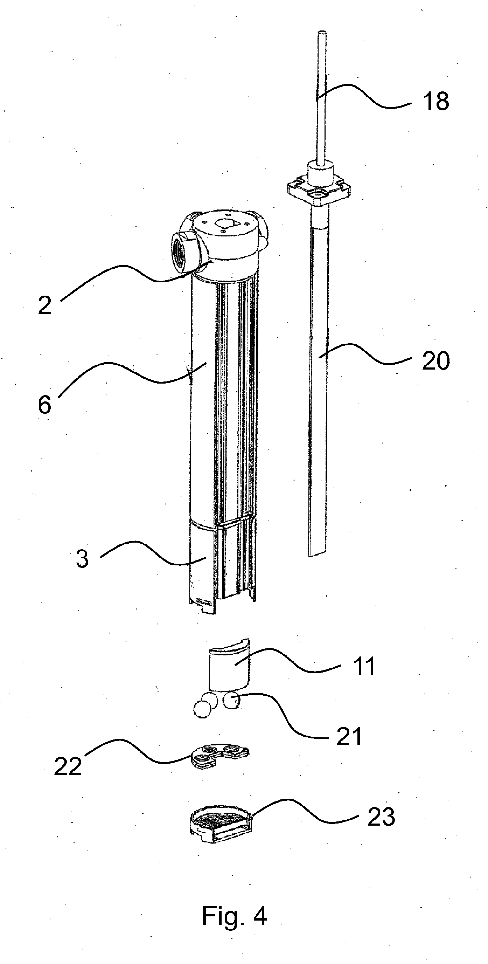

**Fig. 4** zeigt das funktionsintegrierte und nach Fügung einstückige Bauteil in einer zweiten Explosionsteilansicht der Ausführungsform zusammen mit weiteren Bauteilen der Entnahmeinrichtung 1. Zu erkennen ist das Elektronikmodul 20, welches von oben in das einstückige Bauteil einführbar und im Kopfteil 2 befestigbar ist. Der Schwimmer 11 ist von Richtung des Fußteils 3 in eine offene Kammer 7 einschiebbar und dort gleitend gelagert. Ebenfalls dargestellt sind drei Kugeln 21, die als schwerkraftgetriebener Nachlaufstopp wirkend sind. Sie sind hierzu ein einer entsprechenden Fortsetzung eines geschlossenen Kanals 7 im Fußteil 3 aufgenommen und mittels einer Kugelhalteplatte 22 nach unten gesichert. Ein Grobsieb 23 ist ebenfalls dargestellt, durch das im Benutzungsfall das Fluid hindurchtreten muß, bevor es entnommen werden kann.

Mit großem Vorteil ist bei dieser Erfindung auch ein Grobsiebwechsel möglich, so dass ebenfalls ein Drehen des Schwimmers ermöglicht ist, wodurch sich invertierende Schaltfunktionen der Entnahmeinrichtgung erreichen lassen.

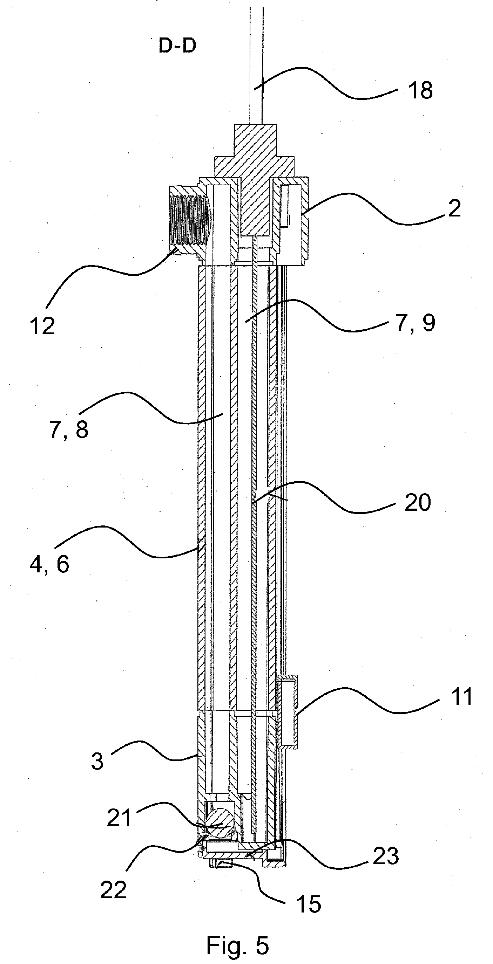

**Fig. 5** zeigt einen Längsschnitt durch die Ausführungsform, zu erkennen ist eine der mindestens zwei fluidführenden Kammern 8, die Elektronikmodulkammer 9 mit Elektronikmodul 20 und Betriebsmittel- und Datenleitung 18, der Schwimmer 11 als Teil der Füllstandsermittlung, zu der auch das Elektronikmodul 20 gehört, sowie Anschlüsse 12 im Kopfteil 2 zur Medienweiterleitung sowie die schwerkraftgetriebene Rücklaufsperre in Form einer Kugel 21, in einer Kugelkammer am Ort gehalten von einer Kugelhalteplatte 22. Ein Grobsieb 23 schließt die Vorrichtung nach unten hin ab, Abstandshalter 15 stellen sicher, dass das Grobsieb stets beabstandet zu einem Behälterboden angeordnet ist. Zu erkennen ist auch, dass das Fußteil 3 die Kammern 7 des Mehrkammerrohrs 6 fortführend ist, ebenso wie das Kopfteil 2.

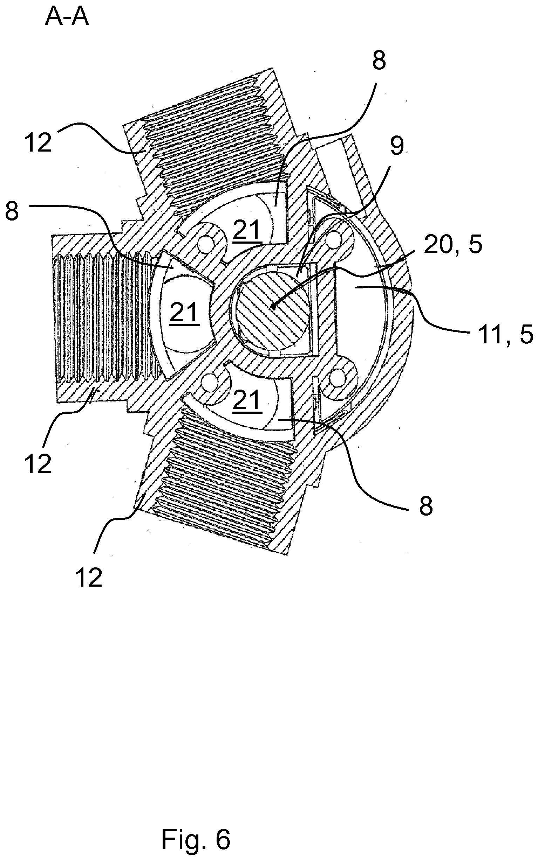

**Fig. 6** zeigt einen Querschnitt in der Ebene A-A der Fig. 1 durch das Kopfteil 2. Drei Anschlüsse 12 dienen zur Weiterleitung von flüssigem Medium, welches in drei Fluidführungskammern 8 im Benutzungsfall aufsteigend gefördert wird. Ein Schwimmer 11 bildet zusammen mit dem Elektronikmodul 20, welches in einer Elektronikmodulkammer 9 geführt ist, die Füllstandsermittlung 5. Der Schwimmer 11 ist dabei formschlüssig an den radial inneren Wänden einer offenen Kammer 7 des Mehrkammerrohrs 6 geführt, insbesondere diese radial inneren Wände die freien Enden des Schwimmers 11 umgreifen und damit eine Führung 24 für diesen bilden.

Zu erkennen ist, dass die drei benachbarten Fluidführungskammern 8 auch im Kopfteil voneinander fluiddicht durch Trennwände getrennt sind, so dass sich drei unabhängige Fluidführungen ergeben. Dies erlaubt eine mehrkanalige Medienführung, so dass alle Fluidführungskammern 8 zur Medienentnahme genutzt werden können oder zwei zur Entnahme und eine zur Medienrückführung oder eine zur Entnahme und zwei zur Medienrückführung nutztbar sind. Grundsätzlich ist es auch denkbar, die Vorrichtung so zwischen zwei oder drei Behältern anzuordnen, dass jede Fluidführungskammer 8 mit einem anderen Behälter in Kontakt steht und daher mit einer Vorrichtung drei unterschiedliche Fluide entnehmbar sind. In diesem Fall wäre jedoch keine Medienrückführung vorgesehen.

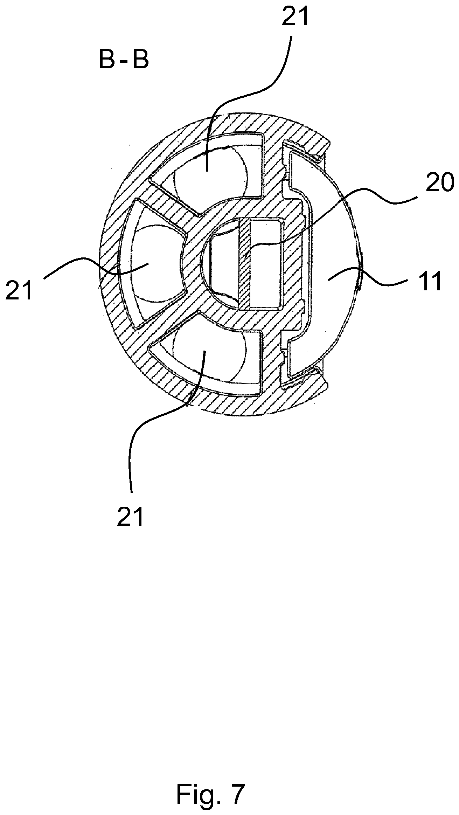

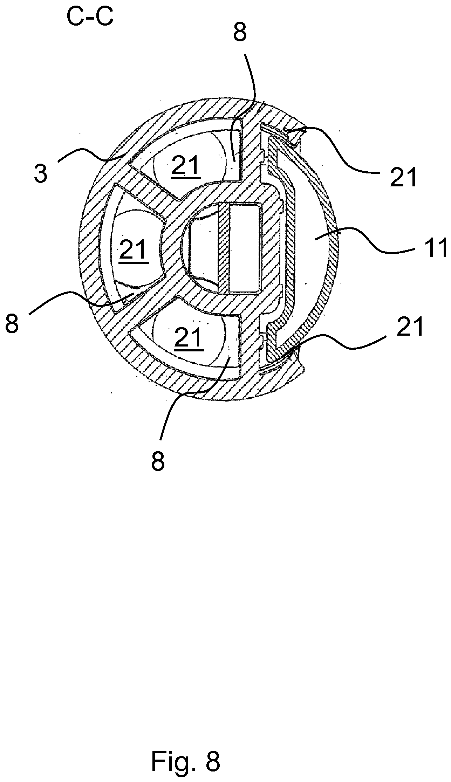

**Fig. 7** zeigt einen Querschnitt in der Ebene B-B der Fig. 1 und **Fig. 8** einen Querschnitt in der Ebene C-C der Fig. 1.

### BEZUGSZEICHENLISTE

- 1: Entnahmeeinheit
- 2: Kopfteil
- 3: Fußteil
- 4: Fluidleitung
- 5: Füllstandsermittlung
- 6: Mehrkammerrohr
- 7: Kammer
- 8: Fluidführungskammer
- 9: Elektronikmodulkammer
- 10: Füllstandsermittlungskammer
- 11: Schwimmer
- 12: Anschluß
- 13: Aufnahme
- 14: Grobsieb
- 15: Abstandshalter
- 16: Umfangskontur
- 17: Ende
- 18: Betriebsmittelleitung
- 19: Behälter
- 20: Elektronikmodul
- 21: Kugel
- 22: Kugelhalteplatte
- 23: Grobsieb
- 24: Führung Schwimmer

## Patentansprüche

1. Entnahmeeinheit (1) für Fluide zur lösbaren Verbindung mit einem Fluidtank, aufweisend ein Kopfteil (2), ein Fußteil (3) und mindestens eine dazwischen angeordnete und mit beiden verbundene Fluidleitung (4) sowie eine Füllstandsermittlung (5), wobei die Fluidleitung (4) als Mehrkammerrohr (6) ausgebildet ist, **dadurch gekennzeichnet, dass** die Fluidleitung (4) unlösbar einstückig mit dem Kopfteil (2) und/oder dem Fußteil (3) verbunden ausgebildet ist und mindestens eine fluidführende Kammer (8) mit einer gemeinsamen Zwischenwand von mindestens einer benachbarten und angrenzenden fluidführenden Kammer (8) getrennt ausgebildet ist.

2. Entnahmeeinheit (1) nach Anspruch 1, **dadurch gekennzeichnet, dass** sie keine zwischen Mehrkammerrohr (6) und Kopf- oder Fußteil (2, 3) wirkende Dichtungselemente aufweist.

3. Entnahmeeinheit (1) nach Anspruch 1 oder 2, **dadurch gekennzeichnet, dass** das Mehrkammerrohr (6) mindestens vier Kammern (7) aufweist, insbesondere zwei Kammern (8) zur Fluidführung, eine Kammer zur Aufnahme eines Elektronikmoduls (9) und eine Kammer (10) zur Aufnahme der Füllstandsermittlung (5), insbesondere eines Schwimmers (11).

4. Entnahmeeinheit (1) nach Anspruch 1, 2 oder 3, **dadurch gekennzeichnet, dass** das Kopfteil (2) Anschlüsse (12) für jede Kammer zur Fluidführung (8) aufweist.

5. Entnahmeeinheit (1) nach einem der vorherigen Ansprüche, **dadurch gekennzeichnet, dass** das Fußteil (3) die Kammer (9) zur Aufnahme des Elektronikmoduls verschließend ausgebildet sind und/oder eine Aufnahme (13) für ein Grobsieb (14) aufweist und/oder Abstandshalter (15) zur Bildung eines Abstandes zu einem Behälterboden aufweist.

6. Entnahmeeinheit (1) nach einem der vorhergehenden Ansprüche, **dadurch gekennzeichnet, dass** der Schwimmer (11) nicht über eine Umfangskontur (16) der Entnahmeeinheit (1) herausragend ausgebildet ist.

7. Entnahmeeinheit (1) nach einem der vorhergehenden Ansprüche, **dadurch gekennzeichnet, dass** sie gebildet ist aus einem Material gewählt aus der Gruppe gebildet durch: PA12, PPS, HDPE, PVC, PP, PPH, Edelstahl, hochlegiertem Stahl, rostfreiem Stahl, Aluminium.

8. Entnahmeeinheit (1) nach einem der vorhergehenden Ansprüche, **dadurch gekennzeichnet, dass** sie bei denjenigen Wänden, die im Betriebszustand mit Fluid in Berührung kommen, Wandstärken von < 2 mm aufweist, insbesondere auch Schweißnahtbreiten von > 2 mm.

9. Verfahren zur Herstellung einer Entnahmeeinheit gemäß den Merkmalen der Ansprüche 1 bis 8, bei dem ein Kopfteil (2) und ein Fußteil (3) jeweils mit einem Ende (17) eines Mehrkammerrohrs (6) durch Schweißen unter Erzeugung von Schweißnähten einstückig und unlösbar gefügt werden.

10. Verfahren gemäß Anspruch 9, bei dem die Schweißnähte mittels Heizelementschweißens, insbesondere Spiegelschweißen, oder Heizwendelschweißens erzeugt werden, bevorzugt mittels Heizelementschweißens.

11. Verfahren gemäß Anspruch 9, bei dem das Mehrkammerrohr (6) mittels eines Extrusionsverfahrens hergestellt wird und/oder das Kopfteil (2) und/oder Fußteil (3) jeweils als Spritzgußteil hergestellt wird.

## Claims

1. Removal unit (1) for fluids for detachable connection to a fluid tank, having a head part (2), a foot part (3) and at least one fluid line (4) arranged therebetween and connected to both, as well as a fill level detector (5), the fluid line (4) being designed as a multi-chamber tube (6), **characterized in that** the fluid line (4) is designed to be non-detachably connected in one piece to the head part (2) and/or the foot part (3) and at least one fluid-conducting chamber (8) is designed to be separated from at least one adjacent and adjoining fluid-guiding chamber (8) by a common intermediate wall.

2. Removal unit (1) according to claim 1, **characterized in that** it has no sealing elements acting between the multi-chamber tube (6) and the head or foot part (2, 3).

3. Removal unit (1) according to claim 1 or 2, **characterized in that** the multi-chamber tube (6) has at least four chambers (7), in particular two chambers (8) for fluid guidance, a chamber for receiving an electronic module (9) and a chamber (10) for receiving the fill level detector (5), in particular a float (11).

4. Removal unit (1) according to claim 1, 2 or 3, **characterized in that** the head part (2) has connections (12) for each chamber for fluid guidance (8).

5. Removal unit (1) according to one of the preceding claims,
**characterized in that** the foot part (3) is designed to close the chamber (9) for receiving the electronic module and/or has a receptacle (13) for a coarse sieve (14) and/or has spacers (15) for forming a distance from a container base.

6. Removal unit (1) according to one of the preceding claims,
**characterized in that** the float (11) is designed to not protrude beyond a circumferential contour (16) of the removal unit (1).

7. Removal unit (1) according to one of the preceding claims,
**characterized in that** it is formed from a material selected from the group formed by: PA12, PPS, HDPE, PVC, PP, PPH, stainless steel, high-alloy steel, rustproof steel, aluminum.

8. Removal unit (1) according to one of the preceding claims,
**characterized in that** it has wall thicknesses of < 2 mm in those walls which come into contact with fluid in the operating state, in particular also weld seam widths of > 2 mm.

9. Method for manufacturing a removal unit according to the features of claims 1 to 8, in which a head part (2) and a foot part (3) are each joined integrally and non-detachably to one end (17) of a multi-chamber tube (6) by welding with the creation of weld seams.

10. Method according to claim 9, in which the weld seams are produced by means of heating element welding, in particular mirror welding, or electrofusion welding, preferably by means of heating element welding.

11. Method according to claim 9, in which the multi-chamber tube (6) is produced by means of an extrusion process and/or the head part (2) and/or foot part (3) each is produced as an injection-molded part.

## Revendications

1. Unité de prélèvement (1) pour fluides destinée à être reliée de manière amovible à un réservoir de fluide, présentant une partie de tête (2), une partie de pied (3) et au moins une conduite de fluide (4) disposée entre celles-ci et connectée aux deux, ainsi qu'un dispositif de détermination du niveau de remplissage (5), la conduite de fluide (4) étant réalisée sous forme de tube à plusieurs chambres (6), **caractérisé en ce que** la conduite de fluide (4) est réalisée d'une seule pièce indissociable avec la partie de tête (2) et/ou la partie de pied (3) et **en ce qu'**au moins une chambre de guidage de fluide (8) est réalisée avec une paroi intermédiaire commune séparée d'au moins une chambre de guidage de fluide (8) voisine et contiguë.

2. Unité de prélèvement (1) selon la revendication 1, **caractérisée en ce qu'**elle ne comporte pas d'éléments d'étanchéité agissant entre le tube à plusieurs chambres (6) et la partie de tête ou de pied (2, 3).

3. Unité de prélèvement (1) selon la revendication 1 ou 2, **caractérisée en ce que** le tube à plusieurs chambres (6) présente au moins quatre chambres (7), en particulier deux chambres (8) de guidage de fluide, une chambre pour recevoir un module électronique (9) et une chambre (10) pour recevoir le dispositif de détermination du niveau de remplissage (5), en particulier un flotteur (11).

4. Unité de prélèvement (1) selon la revendication 1, 2 ou 3,
**caractérisée en ce que** la partie de tête (2) présente des raccords (12) pour chaque chambre de guidage du fluide (8).

5. Unité de prélèvement (1) selon l'une des revendications précédentes, **caractérisée en ce que** la partie de pied (3) est conçue pour fermer la chambre (9) pour recevoir le module électronique et/ou présente un logement (13) pour un tamis grossier (14) et/ou présente des écarteurs (15) pour former une distance par rapport au fond d'un récipient.

6. Unité de prélèvement (1) selon l'une des revendications précédentes, **caractérisée en ce que** le flotteur (11) est réalisé en ne saillie pas par rapport à un contour périphérique (16) de l'unité de prélèvement (1).

7. Unité de prélèvement (1) selon l'une des revendications précédentes, **caractérisée en ce qu'**elle est formée d'un matériau choisi dans le groupe formé par : PA12, PPS, HDPE, PVC, PP, PPH, acier spécial, acier fortement allié, acier inoxydable, aluminium.

8. Unité de prélèvement (1) selon l'une des revendications précédentes, **caractérisée en ce qu'**elle présente des épaisseurs de paroi < 2 mm pour les parois qui entrent en contact avec le fluide en état de fonctionnement, en particulier également des largeurs de soudure > 2 mm.

9. Procédé de fabrication d'une unité de prélèvement selon les caractéristiques des revendications 1 à 8, dans lequel une partie de tête (2) et une partie de pied (3) sont respectivement assemblées d'un seul tenant et de manière indissociable avec une extrémité (17) d'un tube à plusieurs chambres (6) par soudage en créant des cordons de soudure.

10. Procédé selon la revendication 9, dans lequel les cordons de soudure sont réalisés au moyen d'un soudage par élément de chauffage, en particulier d'un soudage au miroir, ou d'un soudage par filament chauffant, de préférence au moyen d'un soudage par élément de chauffage.

11. Procédé selon la revendication 9, dans lequel le tube à plusieurs chambres (6) est fabriqué au moyen d'un procédé d'extrusion et/ou la partie de tête (2) et/ou la partie de pied (3) est fabriquée respectivement sous forme de pièce moulée par injection.
